# EUROPEAN PATENT APPLICATION

(11) **EP 4 675 796 A1**
(43) Date of publication of application: **07.01.2026**
(21) Application number: 24763465.2
(22) Date of filing: 30.01.2024
(51) Int. Cl.: H01M 50/244, H01M 10/44, H01M 50/213, H01M 50/289, H01M 50/291

(54) **BATTERY MODULE, AND POWER SUPPLY DEVICE COMPRISING MULTIPLE BATTERY MODULES**

(30) Priority: 28.02.2023 JP 2023030511
(71) Applicant: Panasonic Energy Co., Ltd., Osaka 570-8511 (JP)
(72) Inventor: AOKI, Tomoaki, Osaka 571-0057 (JP); NAKAMURA, Ginga, Osaka 571-0057 (JP); HEGURI, Katsuyoshi, Osaka 571-0057 (JP); BABA, Takeshi, Osaka 571-0057 (JP)
(74) Representative: Eisenführ Speiser
(86) International application number: PCT/JP2024/002843
(87) International publication number: WO 2024/180980

(57) **Abstract**

A battery module is smoothly insertable into and removable from a storage case in a slidable manner. A battery module 1 is stored in a storage case 24 being a front-open box. The battery module 1 includes a plurality of battery cells 3 being rechargeable, and an outer case 10 containing the plurality of battery cells 3. The outer case 10 is a box including a bottom plate 11, a top plate 12, two side plates 13, a front plate 14, and a rear plate 15. The outer case 10 has a closed internal container space 2. The rear plate 15 includes a bent portion 15B at a lower end of the rear plate 15. The bent portion 15B is bent frontward at a corner 16 at the lower end. The bent portion 15B includes a bottom connector 15a extending frontward from the corner 16, a layered portion 15c layered on and fastened to an upper surface of a rear end of the bottom plate 11, and a step 15b between the bottom connector 15a and the layered portion 15c. The bottom connector 15a has a lower surface flush with a lower surface of the bottom plate 11.

## Description

### TECHNICAL FIELD

The present disclosure relates to a battery module including multiple rechargeable battery cells contained in an outer case, and a power supply including multiple battery modules.

### BACKGROUND ART

A power supply including many rechargeable battery cells connected in series and in parallel is used as a power supply for server backup as a stationary power storage or a power supply for household use, business use, or factory use as a power storage. **In** such a power supply, multiple battery cells may be contained in an outer case to form a battery module. Multiple battery modules are then stored in a storage case, such as a shelf or a rack, and are electrically connected to one another to increase the charge and discharge capacity (e.g., Patent Literature 1). The multiple battery modules stored in the storage case in the power supply are electrically connected to one another, while the state of these battery cells and their outputs in each battery module are under control. This structure increases the discharge capacity of the entire power supply.

The battery module used in such a power supply typically includes multiple battery cells in an outer case being a box elongated in the front-rear direction. The outer case is an assembly of multiple parts of bent metal plates and is thus lightweight and strong. The battery module is horizontally insertable into and removable from a storage space in a front-open storage case in a slidable manner.

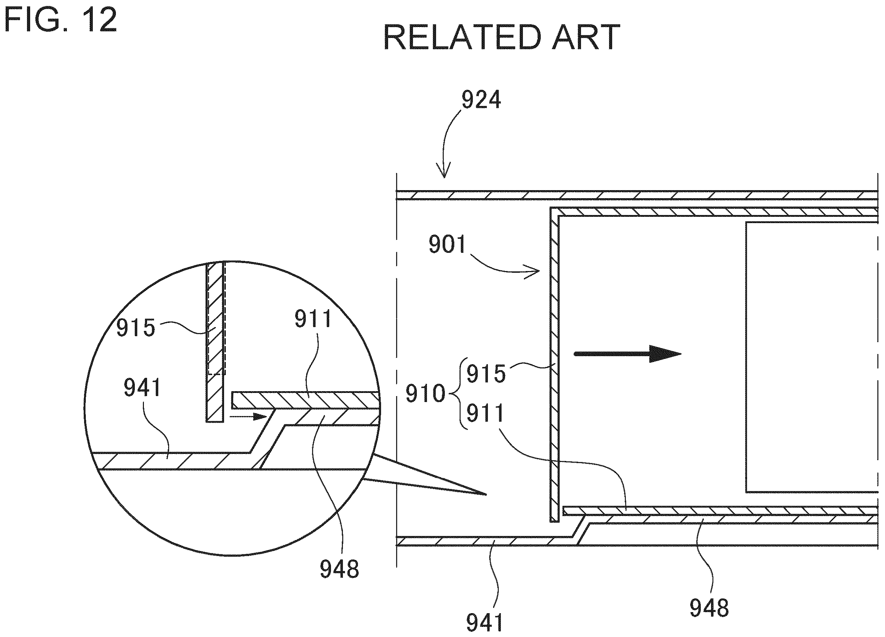

The battery module with a cut edge of a metal plate along a corner at the lower end at the rear may have the cut edge in contact with the bottom plate of the storage case, and thus may be difficult to insert smoothly into and remove from the storage case. For example, the rear plate covering the rear of the outer case being a box may have, at its lower end, a cut edge that may protrude downward from the bottom plate of the outer case and come in contact with the bottom plate of the storage case, causing various concerns. **In** particular, a metal storage case may include thin metal plates to reduce the overall weight. As shown in FIG. 12, a wide surface of, for example, a bottom plate 941 may include a step 948 to increase the overall rigidity. In this case, a rear plate 915 of an outer case 910 with its lower end protruding from the lower surface of a bottom plate 911 as described above may come in contact with the step 948 on the bottom plate 941 of a storage case 924, preventing a battery module 901 from being pulled out.

Although the rear plate 915 having the lower end at a higher position than the bottom plate 911 as indicated by the dot-dash line in FIG. 12 can avoid such concerns, any gap between the lower end of the rear plate and the rear end of the bottom plate can cause entry of foreign matter through the gap or unintended flow of air in and out through the gap. Such a gap is thus to be eliminated.

In the structure with the rear plate having its lower end at a higher position than the bottom plate, the battery module can be smoothly pulled out of the storage case. When the battery module is inserted into the case, however, the bottom plate of the outer case with a cut edge at its rear end may come in contact with the bottom plate of the storage case, possibly causing damage. The battery module with a sharp edge at the corner at the lower end at the rear may come in contact with the upper surface of the bottom plate of the storage case when inserted into the storage case, in addition to when pulled out of the storage case, possibly causing unsmooth insertion or increasing the likelihood of damage or generation of unpleasant sound at the contact.

### CITATION LIST

### PATENT LITERATURE

Patent Literature 1: WO 2012/132134

### SUMMARY OF INVENTION

### TECHNICAL PROBLEM

In response to the above issues, one or more aspects of the present disclosure are directed to a battery module smoothly insertable into and removable from a storage case in a slidable manner, and a power supply including multiple battery modules.

### SOLUTION TO PROBLEM

A battery module according to an aspect of the present disclosure is a battery module stored in a storage case being a front-open box. The battery module includes a plurality of battery cells being rechargeable, and an outer case containing the plurality of battery cells. The outer case is a box including a bottom plate, a top plate, two side plates, a front plate, and a rear plate. The outer case has a closed internal container space containing the plurality of battery cells. The rear plate includes a bent portion at a lower end of the rear plate. The bent portion is bent frontward at a corner at the lower end. The bent portion includes a bottom connector extending frontward from the corner, a layered portion layered on and fastened to an upper surface of a rear end of the bottom plate, and a step between the bottom connector and the layered portion. The outer case includes the bottom connector having a lower surface flush with a lower surface of the bottom plate.

A power supply according to an aspect of the present disclosure includes a plurality of battery modules each including a plurality of battery cells being rechargeable and contained in an outer case, and a storage case being a front-open box. The storage case stores the plurality of battery modules. The outer case for each of the plurality of battery modules is a box including a bottom plate, a top plate, two side plates, a front plate, and a rear plate. The outer case has a closed internal container space containing the plurality of battery cells. The rear plate includes a bent portion at a lower end of the rear plate. The bent portion is bent frontward at a corner at the lower end. The bent portion includes a bottom connector extending frontward from the corner, a layered portion layered on and fastened to an upper surface of a rear end of the bottom plate, and a step between the bottom connector and the layered portion. The bottom connector has a lower surface flush with a lower surface of the bottom plate. The storage case is a box with at least a front side being open. The storage case has an internal storage space defined by a bottom plate, side walls connected to two sides of the bottom plate, and a top plate connecting upper ends of the side walls facing each other. The storage case further includes a plurality of partitions parallel to one another between a pair of the side walls, and the plurality of partitions divide the internal storage space into a plurality of insertion spaces each elongated in a front-rear direction. The plurality of insertion spaces in the storage case respectively receive the plurality of battery modules.

### ADVANTAGEOUS EFFECTS OF INVENTION

The battery module and the battery modules in the power supply according to the above aspects of the present disclosure are smoothly insertable into and removable from the storage case being a front-open box.

### BRIEF DESCRIPTION OF DRAWINGS

FIG. 1 is a perspective view of a power supply according to one embodiment of the present disclosure;
FIG. 2 is a perspective view of the power supply with a battery module pulled out of a storage case in the power supply shown in FIG. 1;
FIG. 3 is a perspective view of the battery module according to the embodiment of the present disclosure;
FIG. 4 is an exploded perspective view of the battery module shown in FIG. 3;
FIG. 5 is a rear perspective view of the battery module shown in FIG. 4 as viewed from below;
FIG. 6 is a cross-sectional view of the battery module taken along line VI-VI in FIG. 3;
FIG. 7 is an enlarged perspective view of the battery module as viewed from the rear;
FIG. 8 is a vertical cross-sectional view of the battery module shown in FIG. 7;
FIG. 9 is an exploded perspective view of an outer case shown in FIG. 7;
FIG. 10 is a cross-sectional perspective view of the storage case shown in FIG. 2;
FIG. 11 is a schematic cross-sectional view of the battery module and a power supply controller connected to each other; and
FIG. 12 is a schematic cross-sectional view of a known battery module, illustrating a lower corner at the rear.

### DESCRIPTION OF EMBODIMENTS

A battery module according to one embodiment of the present disclosure is a battery module stored in a storage case being a front-open box. The battery module includes a plurality of battery cells that are rechargeable, and an outer case containing the plurality of battery cells. The outer case is a box including a bottom plate, a top plate, two side plates, a front plate, and a rear plate. The outer case has a closed internal container space containing the plurality of battery cells. The rear plate includes a bent portion at a lower end of the rear plate. The bent portion is bent frontward at a corner at the lower end. The bent portion includes a bottom connector extending frontward from the corner, a layered portion layered on and fastened to an upper surface of a rear end of the bottom plate, and a step between the bottom connector and the layered portion. The bottom connector has a lower surface flush with a lower surface of the bottom plate.

With the above structure, the rear plate includes a bent corner at the lower end without a sharp cut edge. The bent portion has the lower surface flush with the lower surface of the bottom plate. This allows smooth insertion and removal of the battery module into and from the storage case.

In a battery module according to another embodiment of the present disclosure, the outer case may include a first case, a second case, and a third case. The first case may include the bottom plate and the two side plates connected to two sides of the bottom plate. The second case may include the top plate, fastening tabs connected to two sides of the top plate, and the rear plate connected to a rear end of the top plate. The fastening tabs may connect the two side plates to the top plate. The third case may include the front plate and fastening tabs located on the front plate. The fastening tabs connect the first case and the second case to the third case. The first case, the second case, and the third case are connected to one another with screws and define the closed internal container space.

With the above structure, the outer case includes the first case, the second case, and the third case. Each case is thus formed easily. These cases are easily connected with the screws to form the outer case with a closed internal space, allowing the plurality of battery cells to be arranged in the internal container space in position.

In a battery module according to another embodiment of the present disclosure, the bottom plate may include a cutout guiding the bottom connector in the rear plate. The cutout may have an opening edge facing a peripheral edge of the bottom connector and allow the bent portion to be located in position on the bottom plate.

With the above structure, the bent portion bent frontward at the corner at the lower end can be easily and reliably located in position on the bottom plate. This is achieved with the peripheral edge of the bottom connector in the bent portion being positioned along the opening edge of the cutout in the bottom plate.

In a battery module according to another embodiment of the present disclosure, the rear plate may include a body part connected to the top plate and a corner part defining the corner. The corner part may include a rear connector extending upward from the corner, and the bent portion extending frontward from the corner. The rear connector may be fastened to a lower end of the body part.

With the above structure, the rear plate includes the two parts, facilitating formation of the rear plate with a complex shape.

**In** a battery module according to another embodiment of the present disclosure, the layered portion of the bent portion and the bottom plate may be fastened to each other with a screw. The bottom plate may include a protrusion protruding from an upper surface of the bottom plate and defining a recess on a lower surface of the protrusion. The recess may guide a screw head of the screw. The bottom plate may have a through-hole receiving a threaded portion of the screw in a bottom surface of the recess. The layered portion may have a connection recess guiding the protrusion on the bottom plate. The layered portion may have an internally threaded portion in a bottom surface of the connection recess receiving the screw screwed through the through-hole.

With the above structure, the bottom plate has the recess on the lower surface to guide the screw head of the screw. This allows the bottom plate and the layered portion of the rear plate to be reliably fastened to each other without the screw head of the screw protruding from the lower surface of the bottom plate. The battery module can thus be smoothly inserted into and removed from the storage case.

A power supply according to one embodiment of the present disclosure includes a plurality of battery modules each including a plurality of battery cells being rechargeable and contained in an outer case, and a storage case being a front-open box. The storage case stores the plurality of battery modules. The outer case for each of the plurality of battery modules is a box including a bottom plate, a top plate, two side plates, a front plate, and a rear plate. The outer case has a closed internal container space containing the plurality of battery cells. The rear plate includes a bent portion at a lower end of the rear plate. The bent portion is bent frontward at a corner at the lower end. The bent portion includes a bottom connector extending frontward from the corner, a layered portion layered on and fastened to an upper surface of a rear end of the bottom plate, and a step between the bottom connector and the layered portion. The bottom connector has a lower surface flush with a lower surface of the bottom plate. The storage case is a box with at least a front side being open. The storage case has an internal storage space defined by a bottom plate, side walls connected to two sides of the bottom plate, and a top plate connecting upper ends of the side walls facing each other. The storage case further includes a plurality of partitions parallel to one another between a pair of the side walls. The plurality of partitions divide the internal storage space into a plurality of insertion spaces each elongated in a front-rear direction. The plurality of insertion spaces in the storage case respectively receive the plurality of battery modules.

The above structure can receive the plurality of battery cells in the respective insertion spaces defined in the front-open storage case. The outer case of each battery module includes the rear plate including a bent corner at the lower end without a sharp cut edge. The bent portion has the lower surface flush with the lower surface of the bottom plate. This allows smooth insertion and removal of the battery module into and from the insertion space in the storage case.

In a power supply according to another embodiment of the present disclosure, the storage case may include a plurality of step protrusions arranged in the front-rear direction on a bottom surface of each of the plurality of insertion spaces. The bottom surface may be an upper surface of the bottom plate of the storage case. The plurality of step protrusions may support a bottom surface of a corresponding battery module of the plurality of battery modules stored in the plurality of insertion spaces.

With the above structure, the plurality of step protrusions are arranged in the front-rear direction on the bottom surface of each insertion space. The bottom surface is the upper surface of the bottom plate of the storage case. The step protrusions support the bottom surface of the corresponding battery module stored in the insertion space. The battery module is slid along the upper surfaces of the step protrusions, allowing smooth sliding of the battery module with less frictional resistance achieved with a smaller contact area between the bottom surface of the battery module and the bottom surface of the insertion space. Additionally, the step protrusions on the bottom surface can increase the rigidity and the strength of the storage case. With this structure, a thinner metal plate can be used with increased strength, achieving a costless and lightweight storage case.

In a power supply according to another embodiment of the present disclosure, the storage case may include a power supply controller that controls charging and discharging of the plurality of battery modules, a housing containing the power supply controller in an area at a rear of each of the plurality of insertion spaces, and stopper protrusions on bottom surfaces of boundaries between the housing and the insertion spaces. The stopper protrusions may be in contact with the rear plate of each of the plurality of battery modules and receive the plurality of battery modules in position.

With the above structure, the battery module inserted in the insertion space comes in contact with the stopper protrusion. The battery module is thus received in position.

One or more embodiments of the present disclosure will now be described with reference to the drawings. One or more embodiments described below merely embody the technical idea of the present disclosure, and the present disclosure is not limited to the embodiments described below. The components specified in the claims are not limited to the components described in one or more embodiments. In particular, the dimensions, materials, shapes, and relative positions of the components described in one or more embodiments are mere examples and are not intended to limit the scope of the present disclosure, unless otherwise specified. The sizes and the positional relationships of the components shown in the drawings may be exaggerated for clarity. The same names and the same reference numerals below denote the same or similar components, which may not be described in detail. For elements that constitute one or more aspects of the present disclosure, multiple elements may be formed by a single component that serves as these multiple elements, or the function(s) of a single element may be implemented by multiple components.

A power supply according to one or more embodiments of the present disclosure can be used variously as, for example, a power supply for server backup as a stationary power storage, a power supply for storing electricity generated from natural energy sources such as solar power and wind power, or a power supply for storing off-peak electricity. In particular, the power supply is suitably used for large power and current. A power supply according to one embodiment of the present disclosure will now be described as a power supply for server backup.

### [EMBODIMENT 1]

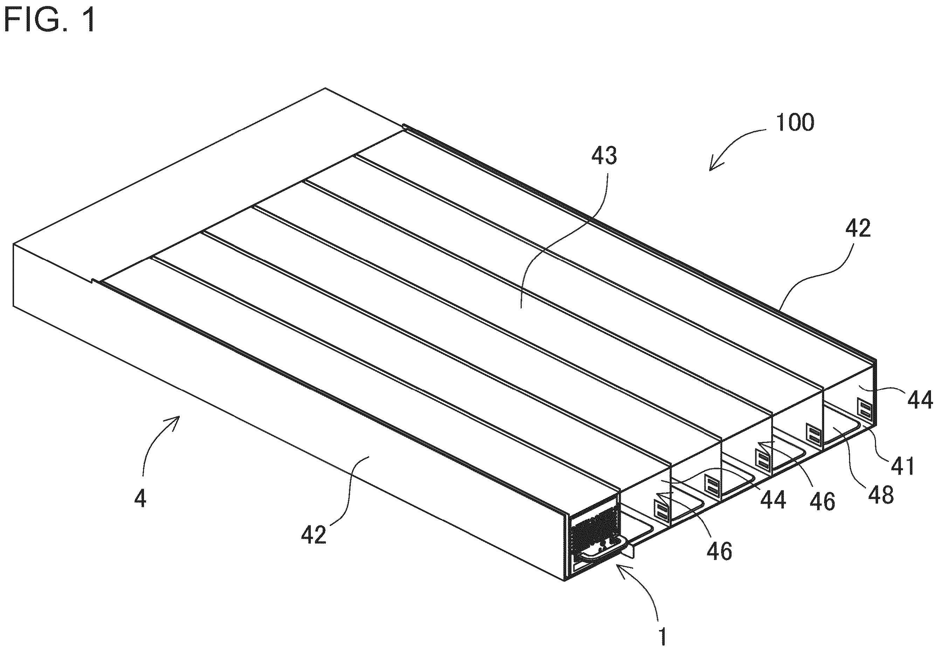

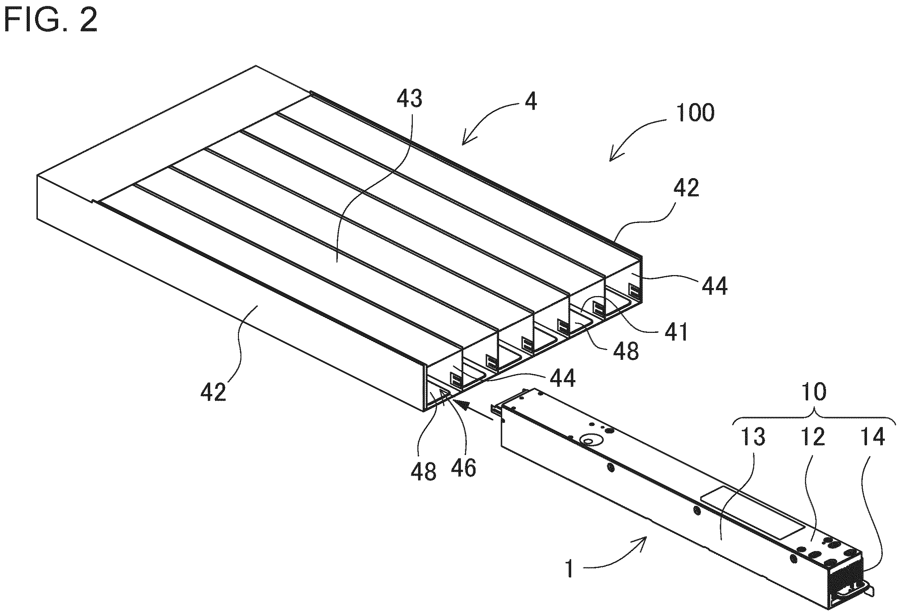

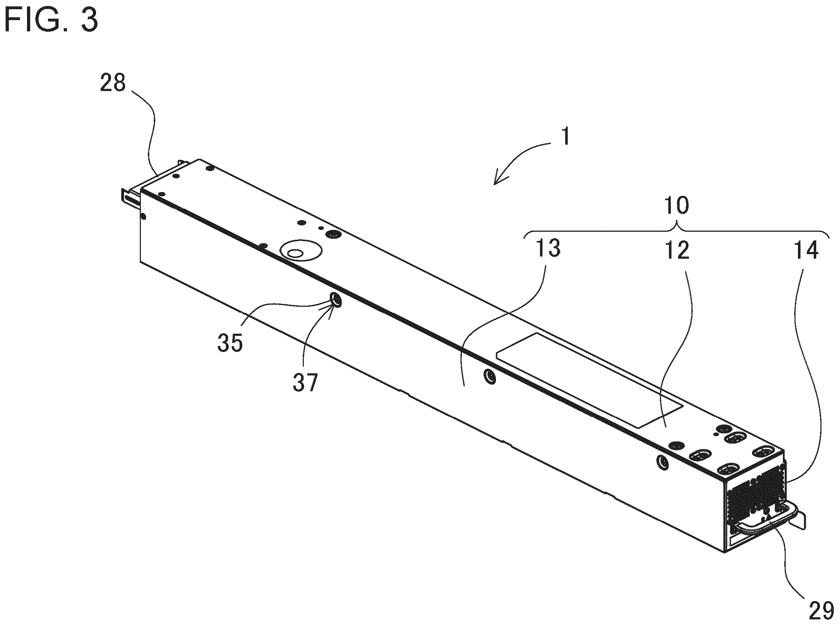

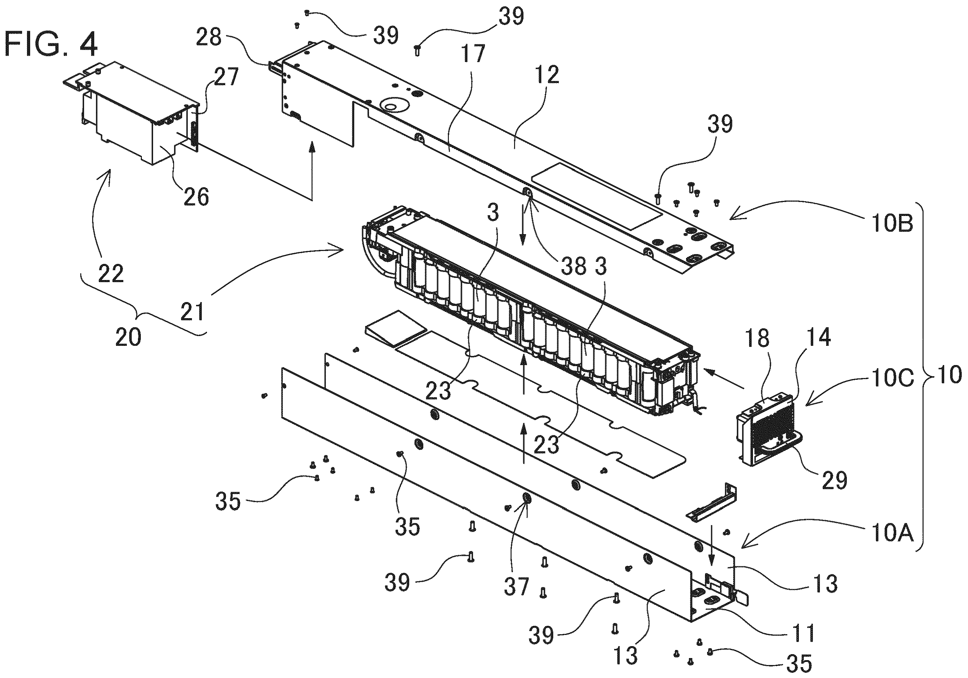

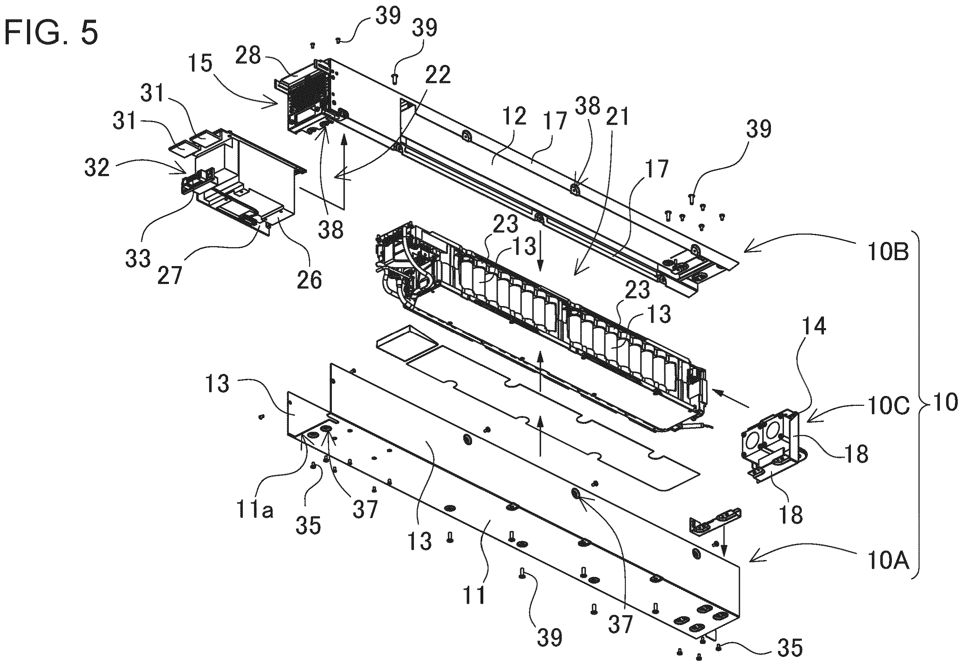

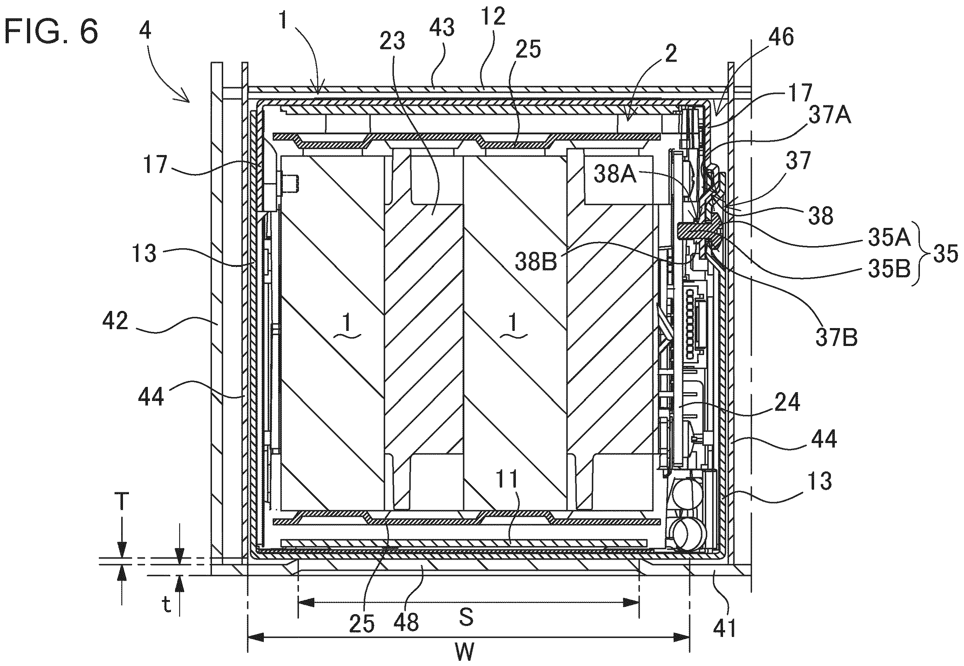

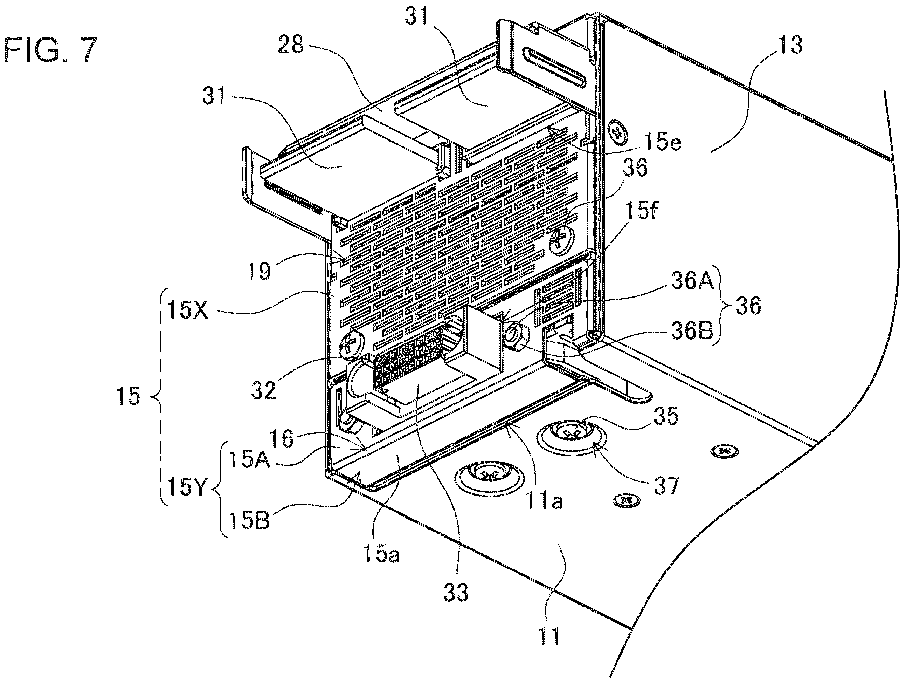

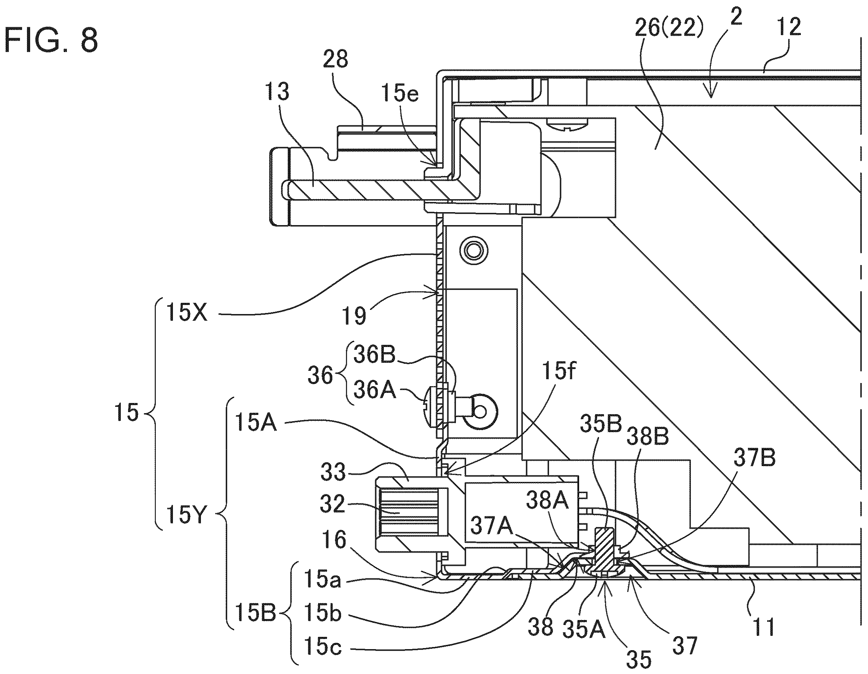

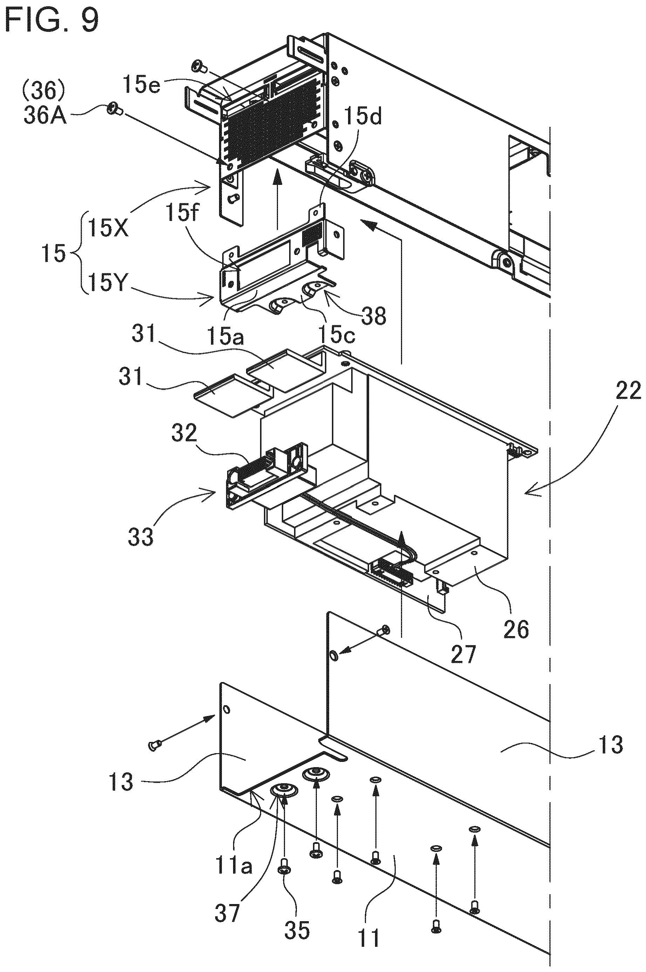

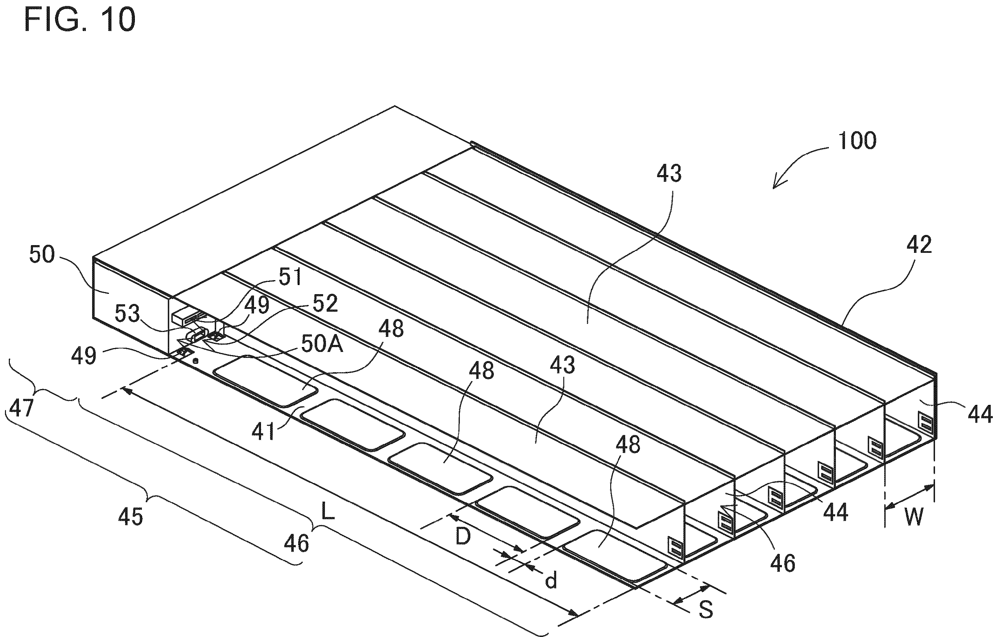

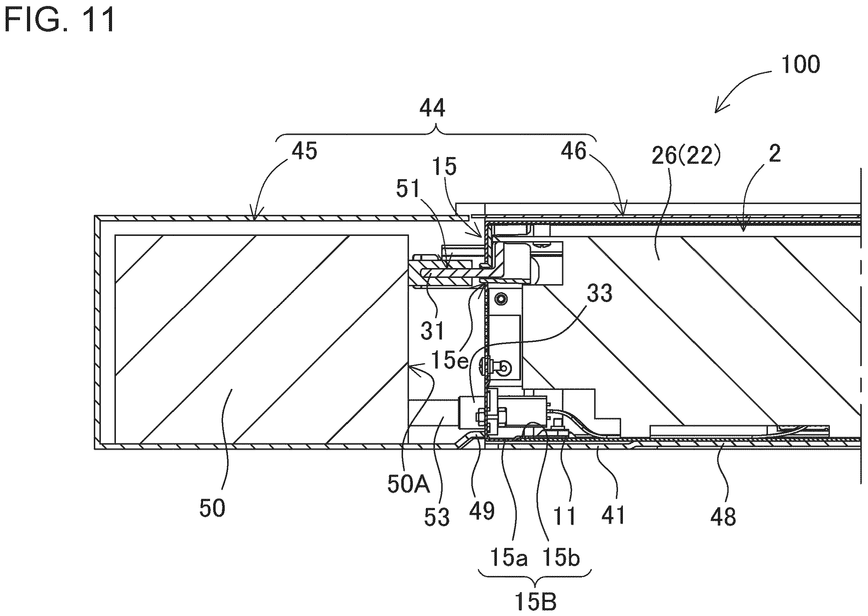

A battery module and a power supply according to Embodiment 1 of the present disclosure are shown in FIGs. 1 to 11. FIG. 1 is an external perspective view of a power supply according to Embodiment 1. FIG. 2 is a perspective view of the power supply with a battery module pulled out of a storage case in the power supply shown in FIG. 1. FIG. 3 is a perspective view of the battery module. FIG. 4 is an exploded perspective view of the battery module in FIG. 3. FIG. 5 is a rear exploded perspective view of the battery module in FIG. 4 as viewed from below. FIG. 6 is a cross-sectional view of the battery module taken along line VI-VI in FIG. 3. FIG. 7 is a bottom perspective view of the battery module as viewed from the rear. FIG. 8 is a vertical cross-sectional view of the battery module as viewed from the rear. FIG. 9 is an exploded perspective view of an outer case shown in FIG. 7 FIG. 10 is a cross-sectional perspective view of the storage case shown in FIG. 2. FIG. 11 is a schematic cross-sectional view of the battery module and a power supply controller connected to each other.

A power supply 100 shown in the figures includes battery modules 1 each including multiple rechargeable battery cells 3, and a storage case 4 horizontally storing the battery modules 1. The power supply 100 shown in the figures includes multiple battery modules 1 detachably attached to the storage case 4. The multiple battery modules 1 are stored in multiple insertion spaces 46 in the storage case 4. The multiple battery modules 1 are aligned in position in the storage case 4.

### (Battery Module 1)

The battery module 1 includes the multiple rechargeable battery cells 3 and an outer case 10 containing the multiple battery cells 3. The battery module 1 shown in FIGs. 4 and 5 contains an internal assembly 20 in an internal container space 2 in the outer case 10.

### (Internal Assembly 20)

The internal assembly 20 includes a battery block 21 including the multiple battery cells 3, and an output unit 22 including output terminals 31.

### (Battery Block 21)

The battery block 21 contains, for example, many cylindrical battery cells 3 located vertically and arranged in parallel to one another in a battery holder 23. The battery holder 23 may be formed from a material with high insulation and high heat resistance. The battery holder 23 is formed from, for example, a resin such as polycarbonate or acrylonitrile butadiene styrene (ABS). The multiple battery cells 3 are connected in parallel and in series. The battery cells 3 are lithium-ion secondary batteries. The battery module 1 including the battery cells 3 that are lithium-ion secondary batteries can increase output with respect to the volume and the weight of the battery module 1. In some embodiments, the battery cells may be lithium polymer batteries or nickel-metal hydride batteries, in place of the lithium-ion batteries. The battery cells in an aspect of the present disclosure are not limited to the lithium-ion batteries, and may be any rechargeable batteries.

The battery block 21 in FIG. 6 includes a circuit board 24 located vertically on a side surface of the battery holder 23. The circuit board 24 is connected to lead plates 25 connected to end face electrodes of the battery cells 3 to detect a midpoint potential of the battery cells 3 connected to each other in series. The circuit board 24 further includes an electronic circuit to detect the state of the multiple battery cells 3. The electronic circuit includes a voltage detection circuit to detect the total potential and the midpoint potential of a battery assembly including the battery cells 3 connected in series and in parallel, and a circuit to detect the temperature of the multiple battery cells 3.

### (Output Unit 22)

As shown in FIGs. 4 and 5, the output unit 22 includes a unit case 26, a circuit board 27, the output terminals 31, and an external connection terminal 32. The unit case 26 holds the circuit board 27 and the output terminals 31. The unit case 26 is formed from an insulating material, such as a resin.

### (Circuit Board 27)

The circuit board 27 includes an electronic circuit such as a current detection circuit to detect a current flowing during charging and discharging, a circuit to detect and calculate a fully charged state of or a remaining capacity of the battery cells 3 based on battery information such as the voltage and the temperature of the battery cells 3 received from the circuit board 24 in the battery block 21, a control circuit to control charging and discharging of the battery cells 3, or a protection circuit to monitor whether the batteries operate normally. The circuit board 27 is rectangular. In the example in FIGs. 4 and 5, the circuit board 27 is located vertically on a side surface of the unit case 26. The circuit board 27 may be formed from a resin such as glass epoxy.

### (Output Terminal 31)

The output unit 22 includes positive and negative output terminals 31 connected to an output end of the battery block 21. The positive and negative output terminals 31 are exposed from the rear surface of the outer case 10. The positive and negative output terminals 31 are connected to positive and negative outputs of the battery block 21 inside the outer case 10. The output terminals 31 are connected to input terminals 51 in a power supply controller 50 inside the storage case 4 with the battery module 1 received in the insertion space 46 in the storage case 4 as shown in FIG. 11 (described in detail later). The output terminals 31 and the input terminals 51 are fittable to each other for electrical connection. The output terminals and the input terminals may not be limited to have the above structure and may have any structure that allow detachable connection with low resistance. The battery module 1 shown in the figure includes a cover 28 protruding from and fixed to the rear of the battery module 1 to cover two side portions and upper portions of the output terminals 31 exposed from the rear. The cover 28 thus protects the output terminals 31.

### (External Connection Terminal 32)

The output unit 22 further includes the external connection terminal 32. The external connection terminal 32 transmits various items of battery information calculated and detected by various circuits in the circuit board 24 and the circuit board 27 and information about charging and discharging to external devices. The external connection terminal 32 also receives information from external devices. The output unit 22 shown in the figure includes a detachable connector 33 protruding from the rear of the outer case 10. The detachable connector 33 includes the external connection terminal 32.

### (Outer Case 10)

As shown in FIGs. 2 to 6, the outer case 10 is a box elongated in the front-rear direction. The outer case 10 has the internal container space 2 for the internal assembly 20. The outer case 10 includes a bottom plate 11, a top plate 12, two side plates 13, a front plate 14, and a rear plate 15. These plates are connected to one another to form an elongated box as a whole. In the example in FIGs. 4 and 5, the outer case 10 is divided into a first case 10A, a second case 10B, and a third case 10C. The first case 10A includes the bottom plate 11 and the side plates 13 connected to two sides of the bottom plate 11. The second case 10B includes the top plate 12, fastening tabs 17 connected to two sides of the top plate 12, and the rear plate 15 connected to the rear end of the top plate 12. The fastening tabs 17 connect the side plates 13 to the top plate 12. The third case 10C includes the front plate 14 and fastening tabs 18 connected to the front plate 14. The fastening tabs 18 connect the first case 10A and the second case 10B to the third case 10C. These cases are connected to one another to form the elongated box as a whole.

The first case 10A, the second case 10B, and the third case 10C are each formed by cutting a metal plate and bending the metal plate into the corresponding predetermined shape. Such metal plates may be formed from aluminum or an aluminum alloy. The first case 10A is formed by punching a single metal plate into a predetermined shape, and bending the metal plate to form a shape having the bottom plate 11 and the side plates 13 connected to the bottom plate 11 to stand vertically. The second case 10B is formed by punching a single metal plate into a predetermined shape and bending the metal plate to form a shape having the top plate 12, the fastening tabs 17 connected to the two sides of the top plate 12 to stand vertically, and the rear plate 15 connected to the rear end of the top plate 12 to stand vertically. The third case 10C is formed by punching a single metal plate into a predetermined shape and bending the metal plate to form a shape having the front plate 14 and the fastening tabs 18 connected to the top, bottom, right, and left of the front plate 14.

The outer case 10 described above includes the first case 10A, the second case 10B, and the third case 10C that are divided from one another. This structure allows easy formation of each divided case. The divided cases connected to one another with screws allows easy assembly of the closed outer case 10 including the multiple battery cells 3 in position in the internal container space 2. The outer case 10 in one or more embodiments of the present disclosure may not be divided into the three cases, but may be divided into two cases or four or more cases.

### (Rear Plate 15)

The outer case 10 according to one or more embodiments of the present disclosure has no cut edge of a metal plate exposed at a corner 16 at the lower end of the rear plate 15 of the outer case 10. To achieve this structure, the outer case 10 has the rear plate 15 bent frontward at the corner 16 at the lower end of the rear plate 15 as shown in FIGs. 7 and 8. In other words, the corner 16 is a bent portion at the lower end of the rear plate 15 without including the cut edge. A bent portion 15B bent frontward at the corner 16 includes a bottom connector 15a extending frontward from the corner 16, a layered portion 15c layered on and fastened to the upper surface of the rear end of the bottom plate 11, and a step 15b between the bottom connector 15a and the layered portion 15c. In the outer case 10, the bent portion 15B of the rear plate 15 is frontward from the corner 16, and the layered portion 15c as the distal end of the bent portion 15B is layered on the upper surface of the bottom plate 11 and fastened to the bottom plate 11 with screws. In the outer case 10 with this structure, the bottom connector 15a extending frontward from the corner 16 at the lower end of the rear plate 15 has the lower surface flush with the lower surface of the bottom plate 11 at the rear end. In other words, the step 15b in the bent portion 15B has the height equal to the thickness of the bottom plate 11. The bent portion 15B and the bottom plate 11 connected to each other can thus have their lower surfaces flush with each other. In this manner, the corner 16 at the lower end of the rear plate 11 is a bent corner formed by bending a metal plate as shown in the figure. This structure can eliminate a sharp cut edge of the metal plate at the corner 16 and thus reliably prevents the sharp cut edge from coming in contact with the bottom plate 41 of the storage case 4, which is the bottom surface of the insertion space 46. This allows smooth sliding of the battery module 1.

### (Cutout 11a)

The outer case 10 shown in FIGs. 5, 7, and 9 further includes a cutout 11a in the bottom plate 11 to guide the bottom connector 15a in the rear plate 15. The bottom plate 11 shown in the figure includes the cutout 11a formed by cutting its rear end to define its rear edge to be frontward from the corner 16 at the lower end of the rear plate 15. The cutout 11a has an opening edge facing the peripheral edge of the bottom connector 15a. In the bottom plate 11 with this structure, the bottom connector 15a can be fitted to the cutout 11a to guide the peripheral edge of the bottom connector 15a along the opening edge of the cutout 11a in the bottom plate 11. The bent portion 15B can thus be located in position on the bottom plate 11 easily and reliably. The cutout 11a may have a lateral width (H) greater than a lateral width (S) of a step protrusion 48 on the bottom plate 41 of the storage case 24 (described later). The corner 16 can thus be placed reliably on the upper surface of the step protrusion 48, allowing smooth sliding of the battery module 1.

### (Body Part 15X and Corner Part 15Y)

The rear plate 15 shown in the figure includes a body part 15X having the upper end connected to the top plate 12 and a corner part 15Y defining the corner 16. The corner part 15Y includes a rear connector 15A extending upward from the corner 16 and the bent portion 15B extending frontward from the corner 16. The rear connector 15A is fastened to the lower end of the body part 15X. The rear connector 15A shown in the figure includes connection tabs 15d protruding upward. The rear connector 15A is fastened to the lower end of the body part 15X with fasteners 36 including screws 36A placed through the connection tabs 15d and nuts 36B. Such a structure including the rear plate 15 including two parts allows easy formation of the rear plate 15 with a complex shape. However, the rear plate 15 may be a single member separate from the top plate 12.

### (Screw 35, Recess 37, and Connection Recess 38)

As shown in the cross-sectional view in FIG. 8, the rear plate 15 described above is fastened to the bottom plate 11 with the layered portion 15c layered on and fastened to the upper surface of the bottom plate 11 with the screws 35. The bottom plate 11 receiving the screws 35 has recesses 37 to guide screw heads 35A of the screws 35 not to protrude from the bottom surface of the outer case 10. The bottom plate 11 in FIGs. 8 and 9 includes protrusions 37A protruding from its upper surface to have the recesses 37 on the lower surface of the protrusions 37A. Each recess 37 guides the screw head 35A of the corresponding screw 35. The recess 37 has, in its bottom surface, an insertion hole 37B to receive a threaded portion 35B of the screw 35. The layered portion 15c has connection recesses 38 to guide the protrusions 37A at positions facing the protrusions 37A on the bottom plate 11. Each connection recess 38 has an internally threaded portion 38A in the bottom surface to receive the corresponding screw 35 screwed through the insertion hole 37B in the recess 37. The layered portion 15c shown in the figure includes cylinders 38B formed by burring. The cylinders 38B protrude inward from the rear surfaces of the connection recesses 38. Each cylinder 38B includes the internally threaded portion 38A in the inner surface to tighten the screw 35 more reliably. The internally threaded portion may be a nut. The above structure includes the recesses 37 on the lower surface of the bottom plate 11 to guide the screw heads 35A of the screws 35. This structure reliably fastens the layered portion 15c of the rear plate 15 to the bottom plate 11 without the screw heads 35A of the screws 35 protruding from the lower surface of the outer case 10. The battery module 1 can thus be smoothly inserted into and removed from the storage case 24.

As shown in FIG. 6, the outer case 10 also includes the screws 35 described above to connect the fastening tabs 17 on the second case 10B and the side plates 13 of the first case 10A. In this case, the side plates have the recesses 37 to guide the screw heads 35A of the screws 35, whereas the fastening tabs 17 have the connection recesses 38 to guide the protrusions 37A protruding inward from the side plates 13. Each connection recess 38 also has, in its bottom surface, the internally threaded portion 38A to receive the corresponding screw 35 screwed through the insertion hole 37B in the recess 37.

As described above, the first case 10A, the second case 10B, and the third case 10C are connected to one another with the screws 35 and define the closed internal container space 2. The internal assembly 20 is fastened to the bottom plate 11 of the first case 10A or the top plate 12 of the second case 10B with screws 39. The output terminals 31 protruding from the unit case 26 protrude outside through through-holes 15e in the rear plate 15. The detachable connector 33 including the external connection terminal 32 protrudes outside through a through-hole 15f in the rear plate 15. The detachable connector 33 is fastened to the rear plate 15 with the fasteners 36 including the screws 36A and the nuts 36B. The outer case 10 in the figure has vents 19 in the front plate 14 and the rear plate 15 to circulate cooling air inside the outer case 10. The outer case 10 further includes a handle 29 fastened to the front plate. The handle 29 is grippable with a hand for insertion and removal of the battery module.

### (Storage Case 4)

The storage case 4 is a box with at least a front side being open to allow the multiple battery modules 1 to be inserted and removed through the front. The storage case 4 being a box has an internal storage space 45 defined by the bottom plate 41, sidewalls 42 connected to two sides of the bottom plate 41, and a top plate 43 connecting the upper ends of the facing sidewalls 42. The storage case 4 including the bottom plate 41, the sidewalls 42, and the top plate 43 as metal plates has strength to store and hold the multiple battery modules 1.

The storage case 4 further includes multiple insertion spaces 46 to store the multiple battery modules 1. The storage case 4 shown in the figure includes multiple insertion spaces 46 arranged laterally in multiple rows. Each row stores the battery module 1. The storage case 4 shown in FIGs. 1 and 3 includes six lateral rows of the insertion spaces 46 each elongated in the front-rear direction. The insertion spaces 46 horizontally stores the battery modules 1 in an aligned manner. The storage case 4 may include multiple vertical levels of the internal storage spaces 45 arranged laterally in multiple rows.

The storage case 4 in FIG. 1 includes multiple partition walls 44 parallel to one another at predetermined intervals between the side walls 42 located at the two sides of the storage case 4. This structure divides the internal storage space 45 in the storage case 4 into the multiple insertion spaces 46. Such partition walls 44 may also be metal plates. The storage case 4 has the insertion spaces 46 each having its inner shape in conformance with the outer shape of the battery module 1. The battery module 1 can thus be accurately placed in position in the insertion space 46. The storage case 4 allows each of the battery modules 1 to be inserted along the partition walls 44 at the two sides while being positioned.

### (Step Protrusion 48)

The storage case 4 shown in the figure includes the multiple step protrusions 48 arranged in the front-rear direction on the bottom surface of each insertion space 46. The bottom surface is the upper surface of the bottom plate 41. The multiple step protrusions 48 horizontally support the bottom surface of the battery module 1 stored in the insertion space 46. The step protrusions 48 shown in the figure are raised higher than their surroundings by stamping the metal bottom plate 41. The step protrusions 48 arranged on the bottom plate 41 in this manner increase the rigidity and the strength of the bottom plate 41. The insertion space 46 including the step protrusions 48 on its bottom surface can have a smaller contact area with the bottom surface of the battery module 1. This reduces frictional resistance, allowing smooth sliding of the battery module 1 along the upper surfaces of the step protrusions 48.

**In** this manner, the storage case 4 including the multiple step protrusions 48 on the bottom plate 41 can more effectively reinforce the bottom plate 41 and reduce frictional resistance. The storage case 4 shown in the figure includes five step protrusions 48 at equal intervals on the bottom surface of the insertion space 46 in the front-rear direction. Each step protrusion 48 is substantially rectangular in a plan view. Each step protrusion 48 has a predetermined width (D) in the front-rear direction and a predetermined width (S) in the lateral direction. The width (D) of each step protrusion 48 in the front-rear direction is determined based on the full length (L) of the insertion space 46 in the front-rear direction, the number of step protrusions 48 in the insertion space 46, and intervals (d) between the step protrusions 48. For example, each insertion space 46 may include two to ten, or more specifically, three to eight step protrusions. When each insertion space 46 includes n step protrusions 48, each step protrusion 48 may have the width (D) in the front-rear direction in the range of 1/(n+2) to 1/n times the full length (L) of the insertion space 46, and each interval (d) between adjacent step protrusions 48 may be in the range of 1/3 to 1/10 of the width (D) of each step protrusion 48 in the front-rear direction. Each step protrusion 48 may have the lateral width (S) of 50 to 80% of the lateral width (W) of the insertion space 46. Each step protrusion 48 may have a height (T) of 0.5 to 1.5 times a thickness (t) of the metal plate as the bottom plate 41. The step protrusions 48 may be arranged in two rows in each insertion space 46, similarly to train rails (not shown).

### (Power Supply Controller 50 and Housing 47)

The storage case 4 shown in the figure further includes the power supply controller 50 and a housing 47. The power supply controller 50 controls charging and discharging of the multiple battery modules 1. The housing 47 containing the power supply controller 50 is located in an area at the rear of each insertion space 46. The power supply controller 50 in the housing 47 includes the input terminals 51 and joint terminals 52 on its facing surface facing the rear surfaces of the battery modules 1 stored in the insertion spaces 46. The input terminals 51 are connected to the output terminals 31 of the battery modules 1. The joint terminals 52 are connected to the external connection terminals 32 of the battery modules 1. The storage case 4 shown in the figure includes the power supply controller 50 being a rectangular control box in the housing 47. The control box has the front surface as a facing surface 50A facing the battery modules 1. The input terminals 51 to receive the output terminals 31 of the battery modules 1 and the joint terminals 52 to receive the external connection terminals 32 of the battery modules 1 are on the facing surface 50A. Although not shown, the power supply controller 50 in the housing 47 in the storage case 4 is prestored in the storage case 4 and fastened to the rear of the storage case 4 with, for example, fasteners. The storage case 4 in the figure is closed at the rear. However, the storage case 4 may be open at the rear. In this case, the power supply controller 50 in the housing 47 allows its wiring and maintenance through the open rear.

The storage case 4 in the figure further includes stopper protrusions 49 on the bottom surfaces of the boundaries between the housing 47 and the insertion spaces 46. The stopper protrusions 49 are in contact with the rear plates 15 in the battery modules 1 and receive the battery modules 1 in position. In the storage case 4 shown in the figure, the bottom plate 41 is stamped to form the stopper protrusions 49 protruding in a mountain shape. The battery modules 1 horizontally inserted into the respective insertion spaces 46 are received in position by the stopper protrusions 49 on the bottom plate 41. In this case, the output terminals 31 are connected to the input terminals 51, and the external connection terminals 32 are connected to the joint terminals 52 on the facing surface 50A of the power controller 50.

The power supply 100 described above guides the battery modules 1 to the insertion spaces 46 in the storage case 4 to be detachably attached. To detachably attach the battery modules 1 to the insertion spaces 46, the power supply 100 includes the output terminals 31 and the input terminals 51 fittable to each other. The power supply 100 also includes the external connection terminals 32 and the joint terminals 52 connectable to each other with the detachable connectors 33 and joint connectors 53. The output terminals 31 and the input terminals 51 are insertable into and removable from each other and face each other. The detachable connectors 33 including the external connection terminals 32 and the joint connectors 53 including the joint terminals 52 are also insertable into and removable from each other and face each other. In attaching or detaching the battery modules 1, the power supply 100 allows the output terminals 31 and the input terminals 51 to be easily attached or detached while being positioned accurately, and also the external connection terminals 32 and the joint terminals 52 to be easily attached or detached while being positioned accurately. The battery modules 1 can thus be connected or replaced promptly and safely.

### INDUSTRIAL APPLICABILITY

The battery module and the power supply including the multiple battery modules according to one or more embodiments of the present disclosure may be suitably used as a power supply for server backup. The battery module and the power supply may also be used variously as a power supply for household use, business use, or factory use as a power storage, a power supply for storing electricity generated from natural energy sources such as solar power and wind power, or a power supply for storing off-peak electricity.

### REFERENCE SIGNS LIST

- 100: power supply
- 1: battery module
- 2: internal container space
- 3: battery cell
- 4: storage case
- 10: outer case
- 10A: first case
- 10B: second case
- 10C: hird case
- 11: bottom plate
- 11a: cutout
- 12: top plate
- 13: side plate
- 14: front plate
- 15: rear plate
- 15X: body part
- 15Y: corner part
- 15A: rear connector
- 15B: bent portion
- 15a: bottom connector
- 15b: step
- 15c: layered portion
- 15d: connection tab
- 15e: through-hole
- 15f: through-hole
- 16: corner
- 17: fastening tab
- 18: fastening tab
- 19: vent
- 20: internal assembly
- 21: battery block
- 22: output unit
- 23: battery holder
- 24: circuit board
- 25: lead plate
- 26: unit case
- 27: circuit board
- 28: cover
- 29: handle
- 31: output terminal
- 32: external connection terminal
- 33: detachable connector
- 35: screw
- 36: fastener
- 37: recess
- 37A: protrusion
- 37B: insertion hole
- 38: connection recess
- 38A: internally threaded portion
- 38B: cylinder
- 39: screw
- 41: bottom plate
- 42: side wall
- 43: top plate
- 44: partition wall
- 45: internal storage space
- 46: insertion space
- 47: controller housing
- 48: step protrusion
- 49: stopper protrusion
- 50: power supply controller
- 51: input terminal
- 52: joint terminal
- 53: joint connector
- 901: battery module
- 910: outer case
- 911: bottom plate
- 915: rear plate
- 924: storage case
- 941: bottom plate
- 948: step

## Claims

1. A battery module stored in a storage case being a front-open box, the battery module comprising:
a plurality of battery cells being rechargeable; and
an outer case containing the plurality of battery cells, the outer case being a box including a bottom plate, a top plate, two side plates, a front plate, and a rear plate, the outer case having a closed internal container space containing the plurality of battery cells, the rear plate including a bent portion at a lower end of the rear plate, the bent portion being bent frontward at a corner at the lower end, the bent portion including
a bottom connector extending frontward from the corner,
a layered portion layered on and fastened to an upper surface of a rear end of the bottom plate, and
a step between the bottom connector and the layered portion,
the bottom connector having a lower surface flush with a lower surface of the bottom plate.

2. The battery module according to claim 1,
wherein the outer case includes
a first case including the bottom plate and the two side plates connected to two sides of the bottom plate,
a second case including the top plate, fastening tabs connected to two sides of the top plate, and the rear plate connected to a rear end of the top plate, the fastening tabs connecting the two side plates to the top plate, and
a third case including the front plate and fastening tabs located on the front plate, the fastening tabs connecting the first case and the second case to the third case, and
wherein the first case, the second case, and the third case are connected to one another with screws and define the closed internal container space.

3. The battery module according to claim 1, wherein the bottom plate includes a cutout guiding the bottom connector in the rear plate, and the cutout has an opening edge facing a peripheral edge of the bottom connector and allows the bent portion to be located in position on the bottom plate.

4. The battery module according to claim 1,
wherein the rear plate includes a body part connected to the top plate and a corner part defining the corner,
wherein the corner part includes
a rear connector extending upward from the corner, and
the bent portion extending frontward from the corner, and
wherein the rear connector is fastened to a lower end of the body part.

5. The battery module according to any one of claims 1 to 4,
wherein the layered portion of the bent portion and the bottom plate are fastened to each other with a screw,
wherein the bottom plate includes a protrusion protruding from an upper surface of the bottom plate and defining a recess on a lower surface of the protrusion, the recess guides a screw head of the screw, and the bottom plate has a through-hole receiving a threaded portion of the screw in a bottom surface of the recess, and
wherein the layered portion has a connection recess guiding the protrusion on the bottom plate, and the layered portion has an internally threaded portion in a bottom surface of the connection recess receiving the screw screwed through the through-hole.

6. A power supply, comprising:
a plurality of battery modules each including a plurality of battery cells contained in an outer case, the plurality of battery cells being rechargeable; and
a storage case being a front-open box, the storage case storing the plurality of battery modules,
wherein the outer case for each of the plurality of battery modules is a box including a bottom plate, a top plate, two side plates, a front plate, and a rear plate, and the outer case has a closed internal container space containing the plurality of battery cells,
wherein the rear plate includes a bent portion at a lower end of the rear plate, the bent portion is bent frontward at a corner at the lower end,
wherein the bent portion includes
a bottom connector extending frontward from the corner,
a layered portion layered on and fastened to an upper surface of a rear end of the bottom plate, and
a step between the bottom connector and the layered portion,
wherein the bottom connector has a lower surface flush with a lower surface of the bottom plate,
wherein the storage case is a box with at least a front side being open, and the storage case has an internal storage space defined by a bottom plate, side walls connected to two sides of the bottom plate, and a top plate connecting upper ends of the side walls facing each other,
wherein the storage case further includes a plurality of partitions parallel to one another between a pair of the side walls, and the plurality of partitions divide the internal storage space into a plurality of insertion spaces each elongated in a front-rear direction, and
wherein the plurality of insertion spaces in the storage case respectively receive the plurality of battery modules.

7. The power supply according to claim 6, wherein the storage case includes a plurality of step protrusions arranged in the front-rear direction on a bottom surface of each of the plurality of insertion spaces, the bottom surface is an upper surface of the bottom plate of the storage case, and the plurality of step protrusions support a bottom surface of a corresponding battery module of the plurality of battery modules stored in the plurality of insertion spaces.

8. The power supply according to claim 6, wherein the storage case includes
a power supply controller configured to control charging and discharging of the plurality of battery modules,
a housing containing the power supply controller in an area at a rear of each of the plurality of insertion spaces, and
stopper protrusions on bottom surfaces of boundaries between the housing and the insertion spaces, the stopper protrusions being in contact with the rear plate of each of the plurality of battery modules and receiving the plurality of battery modules in position.
